Europäisches Patentamt

European Patent Office

Office européen des brevets

(11) Numéro de publication: **0 386 381**
**A1**

# DEMANDE DE BREVET EUROPEEN

(21) Numéro de dépôt: **89400667.5**

(22) Date de dépôt: **10.03.89**

(51) Int. Cl.⁵: **F16K 15/06, F16K 27/02**

(43) Date de publication de la demande:
**12.09.90 Bulletin 90/37**

(84) Etats contractants désignés:
**BE DE ES FR GB IT NL**

(71) Demandeur: **S.A. HAUDIQUER INDUSTRIE**
**14 Place de l'Eglise**
**F-80530 Bethencourt sur Mer(FR)**

(72) Inventeur: **Haudiquer, Marc**

**21 Grande Rue**
**F-80530 Bethencourt sur Mer(FR)**
Inventeur: **Laffitte, Pierre Alain**
**163 Chemin de Picardie**
**F-76260 Eu(FR)**

(74) Mandataire: **Ecrepont, Robert**
**Cabinet Ecrepont 12 Place Simon Vollant**
**F-59800 Lille(FR)**

(54) **Organe de contrôle de l'écoulement d'un fluide constituant au moins un clapet anti-retour.**

(57) L'invention se rapporte à un organe de contrôle de l'écoulement d'un fluide constituant au moins un clapet anti-retour.

Cet organe est caractérisé en ce qu'au lieu d'être fixe par rapport au siège, la cage (7) est solidaire de l'obturateur et coulisse avec jeu dans l'alésage (15) du corps.

.Fig:1.

EP 0 386 381 A1

## ORGANE DE CONTROLE DE L'ECOULEMENT D'UN FLUIDE CONSTITUANT AU MOINS UN CLAPET ANTI-RETOUR

L'invention se rapporte à un organe de contrôle de l'écoulement d'un fluide constituant au moins un clapet anti-retour.

Elle concerne plus particulièrement mais non exclusivement les dits clapets anti-retour et les disconnecteurs, lesquels sont constitués de plusieurs clapets anti-retour montés de manière telle que, dans les limites définies par l'autorité sanitaire, ils assurent la protection des réseaux d'eau potable contre les retours de fluides pollués provenant des réseaux de chauffage auxquels réseaux d'eau potable et de chauffage, il est alors relié par l'intermédiaire d'un dispositif d'isolement.

Quelle que soit l'application du clapet, son temps de réponse doit être très bref et l'obturation parfaitement réalisée à basse et haute pression.

On connaît déjà de nombreux clapets anti-retour qui, dans leur corps comprennent tous un obturateur qui coopère avec un siège en fonction de la différence des forces de sens opposées qu'il reçoit l'une du fluide sous pression, l'autre d'un ressort de rappel.

L'un d'eux (FR-A-2.234.500) est remarquable :
- en ce que l'obturateur est guidé en translation à l'aide, d'une part, d'une cage fixe par rapport au siège, à l'intérieur de laquelle s'inscrit avec jeu la section horizontale de l'obturateur et, d'autre part, à l'aide d'une tige guide solidarisée à la face aval de l'obturateur et s'engageant dans un alésage fixe par rapport au siège qui est ici perçé dans le fond de la cage,
- en ce que le ressort de rappel est intercalé entre la face arrière de l'obturateur une face fixe par rapport au siège qui est ici constitué par et le fond de la cage et,
- en ce que le siège est constitué par un épaulement du corps contre la périphérie duquel aprés interposition d'un joint plat ou torique est vissée l'extrémité amont de la cage qui, à cet effet, porte à cette extrémité une bague filetée.

On déplore dans ce clapet qu'au delà du taraudage recevant la bague filetée de la cage, le corps doit s'écarter de cette cage pour dégager le passage du fluide vers la périphérie de la cage et n'assure donc pas son positionnement.

Ce mode de montage oblige de réserver à l'extrémité aval du corps, un accés pour le joint et la cage avec son obturateur et son ressort ce qui, notamment dans le cas d'un disconnecteur, complique le montage.

Par ailleurs, et surtout le guidage de la cage dans le corps par la seule bague filetée ne garantit qu'un centrage relatif par rapport au siège et au joint, de la cage qui pourtant doit guider donc elle-même l'obturateur tant par sa face latérale que par sa tige guide.

Il en résulte une mauvaise étanchéité.

Enfin, le joint plat ou torique calé contre l'épaulement du corps ne peut assurer une étanchéité à basse pression telle une pression de seulement trois centimètres de hauteur d'eau.

Un autre clapet connu (FR-A-2.367.236) vise à limiter certains de ces inconvénients en prévoyant de prolonger la portée de la bague filetée par une courte portée cylindrique et de substituer au joint plat ou torique initialement prévu un joint à lèvre souple cylindrique destinéeà être pincée entre la paroi latérale de l'obturateur et la face interne de la bague filetée dès que la force de fermeture de l'obturateur atteint une certaine valeur mais destinée à tenter de simplement se maintenir élastiquement contre la paroi latérale de l'obturateur lorsque la force de fermeture est insuffissante pour assurer le pincement précité.

Malheureusement, même si à neuf le joint peut quelquefois assurer cette double fonction, on déplore une détérioration rapide de sa lèvre souple cylindrique du fait de l'avachissement de cette lèvre notamment par le frottement axial qu'elle reçoit de l'obturateur.

Un des résultats que l'invention vise à obtenir est un organe de contrôle de l'écoulement du fluide constituant au moins un clapet anti-retour qui assure une étanchéité parfaite et durable tant à haute qu'à basse pression.

Un autre résultat que l'invention vise à obtenir est un clapet dont l'obturateur et ses moyens de guidage soient accessibles depuis l'extrémité amont du corps.

A cet effet, elle a pour objet un organe du type précité notamment caractérisé en ce que R1.

L'invention sera bien comprise à l'aide de la description ci-aprés faite à titre d'exemple non limitatif en regard du dessin ci-annexé qui représente schématiquement :

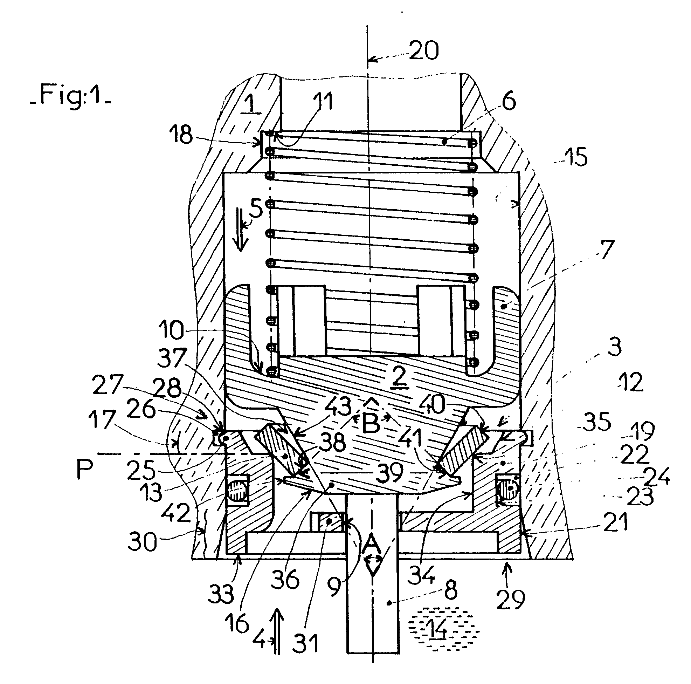

- figure 1 : une vue en coupe du clapet de non retour selon l'invention,
- figure 2 : une vue en coupe du disconnecteur.

En se reportant au dessin, on voit que le clapet comprend dans un corps 1 un obturateur 2 qui coopère avec un siège 3 en fonction de la différence des forces de sens opposées qu'il reçoit l'une 4 du fluide sous pression, l'autre 5 d'un ressort de rappel 6.

L'obturateur 2 est guidé en translation à l'aide d'une cage 7 et d'une tige guide 8 solidaire de l'obturateur 2 et s'engageant dans un alésage 9

fixe par rapport au siège 3.

Le ressort de rappel 6 est intercalé entre la face arrière 10 de l'obturateur 2 et une face 11 fixe par rapport au siège 3.

Le siège 3 est porté par un épaulement 12 avec lequel coopère un joint 13.

Aprés avoir soulevé l'obturateur 2 de son siège 3, le fluide 14 traverse la cage 7 et se dirige vers l'aval du clapet.

En cas de chute de pression, le ressort 6 rappelle l'obturateur 2 vers le siège 3 entre lesquels s'interpose le joint 13.

Au lieu d'être fixe par rapport au siège, la cage 7 est solidaire de l'obturateur et coulisse avec jeu dans l'alésage 15 du corps.

La tige guide est solidaire de la face amont 16 de l'obturateur.

La face 11 fixe par rapport au siège 3 sur laquelle prend appui le ressort 6 est portée par un épaulement 18 dans l'alésage 15 du corps 1.

Quant à l'épaulement 12 portant le siège 3, il est constitué par une face radiale d'une bague 19 rapportée dans l'alésage 15 du corps et, pour assurer la perpendicularité du plan de l'épaulement 12 par rapport à l'axe longitudinal 20 de l'alésage 15, la portée de la face latérale externe 21 dans l'alésage 15, d'une part a une extension axiale suffisante et, d'autre part, a, ainsi que l'alésage, une dimension diamétrale et une tolérance assurant un ajustement serré de la bague dans le dit alésage.

Dans sa partie médiane, la portée est interrompue par une gorge circulaire 22 entre le fond 23 de laquelle et l'alésage 15 est écrasé un joint torique 24 assurant l'étanchéité entre la bague et le corps.

Pour déterminer avec précision la position de la bague dans l'alésage :
- d'une part, au delà du plan P de l'épaulement 12 la bague se poursuit sous la forme d'une jupe 17 suffisamment fixe pour admettre une déformation radiale élastique et portant sur face externe un renflement périphérique 25 donnant localement à la bague une dimension diamètrale supérieure à celle de l'alésage et,
- d'autre part, en regard de ce renflement 25, lorsque la bague est en position requise, l'alésage présente une gorge circulaire 26 dans laquelle le renflement s'insère.

Afin, lors de l'engagement de la bague dans l'alésage, d'assurer notamment la concentricité de la déformation élastique de la jupe, voire même du reste de la bague compte tenu du serrage de l'ajustement dans l'alésage, et d'éviter aussi tout gauchissement de l'épaulement, le renflement se raccorde à l'extrémité 27 de la jupe par un arrondi 28 et à l'entrée 29 de l'alésage est prévue une partie 30 légèrement tronconique.

Par exemple, la pente du tronc de cône sera de l'ordre de 15 à 25 %.

L'alésage 9 dans lequel s'engage la tige guide est solidaire de la bague portant le siège 3.

Afin que la déformation élastique reste sans influence sur la concentricité de cet alésage par rapport à celui 15 du corps 1, l'alésage 9 recevant la tige guide est réalisée dans un moyen 31 qui est associé à la dite bague angulairement par des bras régulièrement répartis autour de ce moyen et eux-mêmes reliés prés de l'extrémité 33 de la bague opposée à celle portant la jupe.

La face interne 34 de la bague est cylindrique et raccordée avec le plan de l'épaulement 12 de la bague par un arrondi 35 trés faible par exemple de l'ordre de un millimètre.

Le joint 13 est porté par l'obturateur 2 qui, à cet effet, entre sa face amont 16 et la tige guide 8 porte un bossage 36 qui présente une gorge 37 dont le fond 38 a une forme tronconique, le cône correspondant ayant son sommet tourné vers l'obturateur et un angle au sommet de l'ordre de quatre vingt dix degrés et sur le bossage est enfilé le joint 13 dont le perçage central 39 enserre élastiquement le fond de la gorge ce qui maintient les faces latérales 40, 41 du joint dans une position leur coopérant une forme tronconique d'angle inverse de celui de la gorge sur l'une 41 desquelles faces, laquelle est dite face amont.

La bague ne pourra ainsi prendre qu'un appui quasi linéaire par l'arrondi entre le plan de l'épaulement et le cylindre de sa face interne.

Du côté de l'extrémité du bossage, le fond de la gorge 37 présente son plus grand diamètre et/ou de ce fait, le joint n'a aucune tendance à s'échapper.

Néanmoins, de préférence, le fond 38 de la gorge sera de ce côté délimité par une courte collerette 42.

Du côté de l'obturateur, le fond 38 de la gorge 37 est délimité par une paroi 43 permettant l'appui de la face en vis à vis 40 du joint 13 et, de ce fait, de forme tronconique, dont le cône a son sommet tourné vers la tige guide 8.

L'angle au sommet A de la paroi 43 est en valeur absolue inférieur à celui B du fond de la gorge et, de ce fait, de la face latérale du joint, grâce à quoi, à faible pression par exemple de trois centimètres de hauteur d'eau, le joint assurera l'étanchéité par appui sur le siège sans qu'il aille lui-même appuyer sur la paroi tandis qu'à haute pression par exemple de dix bars, par déformation du joint celui-ci vient jusqu'en appui sur la dite paroi dont la conicité reste quoiqu'il en soit suffisante pour éviter tout coincement.

Par exemple, l'angle au sommet de la paroi sera de l'ordre de quatre vingt dix degrés.

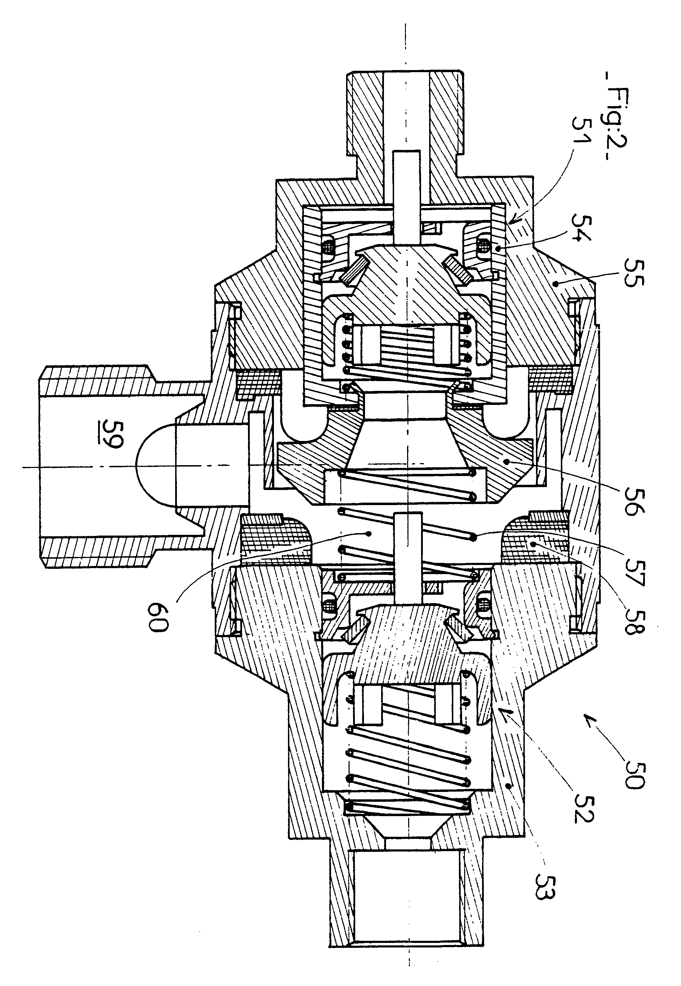

Comme indiqué plus haut un tel clapet peut être utilisé seul ou dans un organe plus complexe tel un disconnecteur 50 (figure 2) dans lequel par exemple l'un 52 des clapets 51, 52 disposés en amont et en aval a son corps 53 qui se confond avec le corps de la partie correspondante du disconnecteur tandis que le corps 54 de l'autre clapet 51 a la forme d'une chemise guidée en translation axiale dans le corps 55 de la partie correspondante du disconnecteur et porte à son extrémité aval un obturateur annulaire 56 qui, selon les forces opposées du fluide et d'un ressort de rappel 57, coopère avec un siège 58 concentrique à l'entrée du clapet de la partie aval du disconnecteur de manière à contrôler le passage du fluide par un orifice 59 raccordé radialement à une chambre 60 intermédiaire aux parties amont et aval du disconnecteur.

## Revendications

1. Ogane de contrôle de l'écoulement d'un fluide constituant au moins un clapet anti-retour comprenant dans un corps (1) un obturateur (2) qui coopère avec un siège (3) en fonction de la différence des forces de sens opposées qu'il reçoit l'une (4) du fluide sous pression, l'autre (5) d'un ressort de rappel (6), cet obturateur étant guidé en translation à l'aide d'une cage (7) et d'une tige guide (8) solidaire de l'obturateur (2) et s'engageant dans un alésage (9) fixe par rapport au siège (3), le ressort de rappel (6) étant intercalé entre la face arrière (10) de l'obturateur (2) et une face (11) fixe par rapport au siège (3), le siège (3) étant porté par un épaulement (12) avec lequel coopère un joint (13),
cet organe étant **CARACTERISE** en ce qu'au lieu d'être fixe par rapport au siège, la cage (7) est solidaire de l'obturateur et coulisse avec jeu dans l'alésage (15) du corps.

2. Organe selon la revendication 1 caractérisé en ce que la tige guide est solidaire de la face amont (16) de l'obturateur.

3. Organe selon la revendication 1 ou 2 caractérisé en ce que l'épaulement (12) portant le siège (3), est constitué par une face radiale d'une bague (19) rapportée dans l'alésage (15) du corps et, pour assurer la perpendicularité du plan de l'épaulement (12) par rapport à l'axe longitudinal (20, 15) de l'alésage, la portée de la face latérale externe (21) dans l'alésage (11), d'une part a une extension axiale suffisante et, d'autre part, a, ainsi que l'alésage, une dimension diamétrale et une tolérance assurant un ajustement serré de la bague dans le dit alésage.

4. Organe selon la revendication 3 caractérisé en ce que dans sa partie médiane, la portée est interrompue par une gorge circulaire (22) entre le fond (23) de laquelle et l'alésage (15) est écrasé un joint torique (24) assurant l'étanchéité entre la bague et le corps.

5. Organe selon la revendication 3 ou 4 caractérisé en ce que, pour déterminer avec précision la position de la bague dans l'alésage :
- d'une part, au delà du plan (P) de l'épaulement (12) la bague se poursuit sous la forme d'une jupe (17) suffisamment fixe pour admettre une déformation radiale élastique et portant sur face externe un renflement périphérique (25) donnant localement à la bague une dimension diamètrale supérieure à celle de l'alésage et,
- d'autre part, en regard de ce renflement (25), lorsque la bague est en position requise, l'alésage présente une gorge circulaire (26) dans laquelle le renflement s'insère.

6. Organe selon la revendication 5 caractérisé en ce que, lors de l'engagement de la bague dans l'alésage, afin d'assurer notamment la concentricité de la déformation élastique de la jupe, voire même du reste de la bague compte tenu du serrage de l'ajustement dans l'alésage, et d'éviter aussi tout gauchissement de l'épaulement, le renflement se raccorde à l'extrémité (27) de la jupe par un arrondi (28) et à l'entrée (29) de l'alésage est prévue une partie (30) légèrement tronconique.

7. Organe selon la revendication 5 ou 6 caractérisé en ce qu'afin que la déformation élastique reste sans influence sur la concentricité de cet alésage par rapport à celui (15) du corps (1), l'alésage (9) recevant la tige guide est réalisée dans un moyen (31) qui est associé à la dite bague angulairement par des bras régulièrement répartis autour de ce moyen et eux-mêmes reliés près de l'extrémité (33) de la bague opposée à celle portant la jupe.

8. Organe selon l'une quelconque des revendications 3 à 7 caractérisé en ce que le joint (13) est porté par l'obturateur (2) qui, à cet effet, entre sa face amont (16) et la tige guide (8) porte un bossage (36) qui présente une gorge (37) dont le fond (38) a une forme tronconique, le cône correspondant ayant son sommet tourné vers l'obturateur et un angle au sommet de l'ordre de quatre vingt dix degrés et sur le bossage est enfilé le joint (13) dont le perçage central (39) enserre élastiquement le fond de la gorge ce qui maintient les faces latérales (40, 41) du joint dans une position leur coopérant une forme tronconique d'angle inverse de celui de la gorge sur l'une (41) desquelles faces, laquelle est dite face amont.

9. Organe selon la revendication 8 caractérisé en ce que, du côté de l'extrémité du bossage, le fond de la gorge (37) présente son plus grand diamètre et/ou de ce fait, le joint n'a aucune tendance à s'échapper et en ce que le fond (38) de la gorge est de ce côté délimité par une courte collerette (42).

10. Organe selon la revendication 8 ou 9 caractérisé en ce que, du côté de l'obturateur, le fond (38) de la gorge (37) est délimité par une paroi (43) permettant l'appui de la face en vis à vis (40) du joint (13) et, de ce fait, de forme tronconique, dont le cône a son sommet tourné vers la tige guide (8) et en ce que l'angle au sommet (A) de la paroi (43) est en valeur absolue inférieur à celui (B) du fond de la gorge et, de ce fait, de la face latérale du joint, grâce à quoi, à faible pression par exemple de trois centimètres de hauteur d'eau, le joint assurera l'étanchéité par appui sur le siège sans qu'il aille lui-même appuyer sur la paroi tandis qu'à haute pression par exemple de dix bars, par déformation du joint celui-ci vient jusqu'en appui sur la dite paroi dont la conicité reste quoiqu'il en soit suffisante pour éviter tout coincement.

Fig.1.

-Fig:2-

| Office européen des brevets | RAPPORT DE RECHERCHE EUROPEENNE | Numero de la demande |
|---|---|---|

_ EP 89 40 0667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 745 432 (WILLIAMS) <br> * Colonne 1, ligne 56 - colonne 2, ligne 27 * <br> --- | 1 | F 16 K 15/06 <br> F 16 K 27/02 |
| A | US-A-2 130 053 (WHITE) <br> * Page 1, colonne de droite, lignes 20-29 * <br> --- | 1,2 | |
| A | US-A-2 182 278 (BRAUER) <br> * Figure 1 * <br> --- | 1,2 | |
| A | US-A-3 937 249 (SUEY) <br> * Colonne 1, ligne 60 - colonne 2, ligne 21 * <br> ----- | 1,2 | |

DOMAINES TECHNIQUES
RECHERCHES (Int. Cl.5)

F 16 K

Le présent rapport a été établi pour toutes les revendications

| Lieu de la recherche | Date d'achèvement de la recherche | Examinateur |
|---|---|---|
| LA HAYE | 20-10-1989 | VERELST P.E.J. |